# EUROPEAN PATENT APPLICATION

(11) **EP 0 541 808 A1**
(43) Date of publication of application: **19.05.1993**
(21) Application number: 91913662.2
(22) Date of filing: 31.07.1991
(51) Int. Cl.: G02B 21/06

(54) **IMAGING INSTRUMENT FOR OBSERVING MAGNIFIED OBJECT**

(30) Priority: 31.07.1990 JP 201387/90; 31.07.1990 JP 201388/90; 28.08.1990 JP 224331/90; 28.08.1990 JP 224332/90; 12.02.1991 JP 38967/91; 12.02.1991 JP 38968/91
(71) Applicant: SCALAR CORPORATION, Tama-shi, Tokyo 206 (JP)
(72) Inventor: YAMAMOTO, Masao, Tama-shi, Tokyo 206 (JP); IGARASHI, Katuyuki, Itabashi-ku, Tokyo 175 (JP)
(74) Representative: CABINET BONNET-THIRION
(86) International application number: JP9101023
(87) International publication number: WO9202842

(57) **Abstract**

An imaging instrument for observing a magnified object, which enables the selection or control of illuminating beams of light classified as sideway incident, downward incident, and transmitted beams as well as of throwing directions of beams. The instrument is provided with a condensing guide at the tip thereof for controlling illuminating beams of light from light source means and throwing light on an object to be observed. By the selective use of light source means provided in a plurality of systems, kinds and throwing directions of beams of light projected through the condensing guide are selected or controlled.

## Description

### FIELD OF THE INVENTION

The present invention relates to an image pickup instrument provided with an illuminating system, for the observation of an enlarged image of the surface or surface layer of an object, such as the human skin, a microorganism or an integrated circuit, at the place of existence of the object without processing the same for observation in the medical, science or industrial field.

### PRIOR ART

Image pickup instruments for the observation of an enlarged image of an object are disclosed, for example, in Japanese Patent Laid-open (Kokai) Nos. Hei 1-26462 and 1-308527 and U.S. Patent No. 4,930,851.

An image of an object picked up by these known image pickup instruments is displayed on a display, i.e., display means, for stand-free observation, in which the image pickup instrument held by hand is applied to the object instead of setting a sample of an object obtained by processing the object by a predetermined procedure on an observing device, such as a microscope, fixedly installed in a predetermined state for observation. The observation units employing image pickup instruments enable anyone to observe the object at a magnification in the range of 50x to 1000x without requiring any technique or any skill.

The control of illuminating light for illuminating an object and the control of image light reflected by the image are most important for the observation of an enlarged image of the object. Generally, normal illuminating light which falls on the object perpendicularly to the surface of the object, transverse illuminating light which travels along a direction nearly parallel to the surface of the object and falls on the object at a sharp angle or transmitted illuminating light which travels through the object if the object is transparent is used for illumination. These kinds of illuminating light have both advantages and disadvantages; the distinctness of an image obtained by illuminating the object with normal illuminating light is liable to be effected by the reflected light, transverse illuminating light enables the stereoscopic observation of the object, which cannot be attained by the use of normal illuminating light, and transmitted illuminating light enables the pictorial observation of the surface layer of a certain thickness of the object, which is applicable only to the observation of a transparent object through. Accordingly, effective observation of an object will be possible if these kinds of illuminating light can be selectively used.

There have been proposed some techniques for the selective use of those kinds of illuminating light.

A technique proposed in Japanese Patent Laid-open (Kokai) No. Hei 1-308527 employs a hemispherical light guide to use transverse illuminating light as principal illuminating light in appropriate combination with normal illuminating light and transmitted illuminating light for satisfactory observation. A technique proposed in U.S. Patent No. 4,930,851 is capable of selectively using different kinds of image light for different mode of observation. However, these previously proposed techniques are unable to use different kinds of illuminating light selectively.

Accordingly, it is an object of the present invention to provide an image pickup instrument capable of selectively using different kinds of illuminating light or of controlling the direction of travel of illuminating light.

### DISCLOSURE OF THE INVENTION

The present invention provides an image pickup instrument comprising: an illuminating means comprising a plurality of light source means, and a light guide having a hemispherical front portion and a light receiving end surface, provided with a central light passing hole formed in the hemispherical front portion, and formed so that illuminating light received through the light receiving end surface into the hemispherical front portion is subjected to total reflection therein and emitted through the side surface of the central light passing hole; an image pickup means for receiving light reflected from an illuminated portion of an object; and an optical means for forming an image of the illuminated portion of the object on the image pickup means. The plurality of light source means are used selectively to use different kinds of illuminating light selectively and to control the direction of travel of illuminating light.

When the plurality of light source means are a light source means for normal illumination and a light source means for transverse illumination, light emitted by the light source means for transverse illumination is guided so as to be received through the light receiving end surface into the solid wall of the light guide, and light emitted by the light source means for normal illumination is guided so as to travel through the inner space of the light guide.

This image pickup instrument capable of controlling illuminating light may be provided with a light source means for transverse illumination and a light source means for normal illumination, and may be constructed so as to receive the illuminating light emitted by the light source means for transverse illumination through the light receiving end surface of the light guide into the solid wall of the same, to subject the illuminating light to total reflection in the solid wall of the light guide, and to receive the illuminating light emitted by the light source means for normal illumination into the inner space of the light guide.

The illuminating light emitted by the light source means for transverse illumination goes through the light receiving end surface of the light guide into the solid wall of the same, is subjected to total reflection in the solid wall of the light guide and leaves the light guide through the side surface of the light passing hole to illuminate the object in directions substantially parallel to the illuminated surface of the object. Part of the illuminating light emitted by the light source means for normal illumination travels through the inner space and the light passing hole of the light guide and falls on the surface of the object perpendicularly to the surface, and part of the illuminating light emitted by the same light source means travels through the transparent, solid wall of the light guide and falls on the surface of the object. Either the light source means for transverse illumination or the light source means for normal illumination may be selectively used, or both the light source means for transverse illumination and the light source means for normal illumination may be simultaneously used, properly regulating the respective luminous intensities of the light source means for transverse illumination and the light source means for normal illumination.

The plurality of light source means may be selectively used to make illuminating light to go through only a portion of the light receiving end surface of the light guide into the light guide so that the illuminating light leaves the light guide through only a portion of the side surface of the light passing hole in a specific direction for directional illumination.

The illuminating light can be controlled for directional illumination by employing a light guide consisting of a plurality of segments separated from each other by opaque partitions extending between the light receiving end surface and the light passing hole and selectively applying the light emitted by the light source means to one of the segments or by disposing a mask provided with a slit between the light source means and the light receiving end surface of a light guide and setting the mask so that the slit corresponds to a selected portion of the light receiving end surface of the light guide to apply the illuminating light only to a desired portion of the light receiving end surface of the light guide.

Thus, the image pickup instrument is capable of using normal illuminating light emitted by the light source means, traveled through the inner space and the light passing hole of the light guide and falling on the surface of an object perpendicularly to the surface of the same, transverse illuminating light emitted by the light source means, transmitted through the solid wall of the light guide by total reflection and falling on the surface of the object in directions substantially parallel to the surface of the object, and transmitted illuminating light transmitted through the portion of the light guide other than the light passing hole, penetrating the surface layer of the object and illuminating the internal structure of the object. A plurality of light source means for transverse illumination are used selectively to apply the illuminating light only to a specific portion of the light receiving end surface of the light guide so that the transverse illuminating light leaves the light guide through a specific portion of the side surface of the light passing hole for directional, transverse illumination. When the mask is used, it is also possible to apply the illuminating light only to a specific portion of the light receiving surface of the light guide by properly setting the mask for directional, transverse illumination.

The light guide may be of a double-wall construction comprising a first light guide member having a hemispherical front portion provided with a central light passing hole, and a second light guide member having an front portion provided with a central through hole, having a light emitting end surface and having a curved side surface extending from the light emitting end surface, and placed inside the first light guide member.

The first light guide member of the light guide of a double-wall construction guides the incident illuminating light for the transverse illumination of an object, and the second light guide member of the same guides the incident illuminating light for the normal illumination of the object. The ratio between the respective intensities of the transverse illuminating light and the normal illuminating light can be determined selectively by properly regulating the luminous intensity of the light source means for the first light guide member and that of the light source for the second light guide member.

The first and second light guide members of the light guide of a double-wall construction may be provided in their rear portions with recesses, portions of the wall of the first light guide member corresponding to the recesses of the second light guide member are fitted in the corresponding recesses of the second light guide member and portions of the wall of the second light guide member corresponding to the recesses of the first light guide member are fitted in the corresponding recesses of the first light guide member to unite the first and second light members so that the light guide of a double-wall construction has only a single light receiving end surface and requires a single annular light source, which simplifies the construction of the image pickup instrument.

The image pickup instrument may be provided with a light guide of a multiwall construction consisting of a plurality of light guide members nested one in another.

The plurality of nested light guide members can be used specially for transverse illumination, normal illumination and transmissive illumination, respectively, light source means may be controlled to apply illuminating light selectively to the light guide members for different modes of illumination, and the transverse illuminating light, the normal illuminating light and the transmitted illuminating light of different intensities can be selectively used in combination.

The multiwall light guide may consist of three light guide members, namely, an outer light guide member for guiding the illuminating light therethrough by total reflection to emit the illuminating light through the side surface of the light passing hole thereof in directions substantially parallel to the surface of the object, and two inner light guide members for guiding the illuminating light therethrough by total reflection to emit the illuminating light downward through the side surfaces of the light passing holes thereof, in which the diameter of the light passing hole of one of the inner light guide member may be smaller than that of the light passing hole of the outer light guide, and the diameter of the light passing hole of the other inner light guide member may be greater than that of the light passing hole of the outer light guide member.

When the multiwall light guide is thus constructed, the outer light guide member guides the illuminating light for transverse illumination, the inner light guide member provided with the light passing hole of a diameter smaller than that of the light passing hole of the outer light guide guides the illuminating light for normal illumination, and the inner light guide member provided with the light passing hole of a diameter greater than that of the light passing hole of the outer light guide member guides the illuminating light so that a portion of the illuminating light emitted downward through the side surface of the light passing hole thereof falls on a portion of the surface of the object surrounding an objective portion of the object, penetrates the object, reflected within the object to illuminate the objective portion from inside.

Each of the foregoing image pickup instruments may be divided into a first unit comprising the optical means and the light source means, and a second unit capable of being detachably joined to the first unit and comprising the image pickup means and a signal processing means for processing signals provided by the image pickup means and giving image signals to a display means.

Since the signal processing means serves as an internal controller, the image pickup system need not be provided with any external controller, and hence, the image pickup instrument can be formed in a relatively small size accordingly. Since the light source means and the signal processing means are internal components of the image pickup instrument, the light source means can be placed near the object and the light source means may be such as having relatively small output capacity and a relatively small size. Since the signal processing means can be disposed near the image pickup means, the capacity and size of the signal processing means may be far smaller than those of a signal processing means incorporated into the prior art image pickup instrument. Thus, the built-in light source means and the built-in signal processing means enable the miniaturization of the light source means and the signal processing means, and the miniaturized light source means and the signal processing means enable the light source means and the signal processing means to be incorporated into the image pickup instrument and enable the miniaturization of the image pickup instrument.

### BRIEF DESCRIPTION OF THE DRAWINGS

Fig. 1 is a fragmentary longitudinal sectional view of an image pickup instrument in a first embodiment according to the present invention;
Fig. 2 is a plan view taken along the direction of the arrow A in Fig. 1;
Fig. 3 is a diagrammatic view of assistance in explaining a mode of illumination when illuminating light is transmitted through a light transmission means for transverse illumination;
Fig. 4 is a diagrammatic view of assistance in explaining a mode of illumination when illuminating light is transmitted through a light transmission means for normal illumination;
Fig. 5 is a side view of the image pickup instrument of Fig. 1;
Fig. 6 is a perspective view of light transmission means and a light guide unit included in an image pickup instrument in a second embodiment according to the present invention;
Fig. 7 is a bottom view of the light guide unit, taken in the direction of the arrow B in Fig. 6;
Fig. 8 is a fragmentary sectional view of the image pickup instrument in the second embodiment;
Fig. 9 is a plan view taken in the direction of the arrow C in Fig. 8;
Fig. 10 is a side view of the image pickup instrument of Fig. 8;
Fig. 11 is a perspective view of light transmission means and a light guide unit included in an image pickup instrument in a third embodiment according to the present invention;
Fig. 12 is a longitudinal sectional view of a light guide unit included in an image pickup instrument in a fourth embodiment according to the present invention;
Fig. 13 is a bottom view of a light transmission means;
Fig. 14 is a perspective view of the light guide unit of Fig. 12;
Fig. 15 is a perspective view of a second light guide member;
Fig. 16 is a perspective view of a first light guide member;
Fig. 17 is a side view of the image pickup instrument in the fourth embodiment;
Fig. 18 is a longitudinal sectional view of a light guide unit included in an image pickup instrument in a fifth embodiment according to the present invention;
Fig. 19 is a perspective view of the light guide unit of Fig. 18 and a light transmission means;
Fig. 20 is a diagrammatic view of assistance in explaining a mode of guiding illuminating light by the light guide unit of Fig. 18;
Fig. 21 is a partially sectional side view of the image pickup instrument in the fifth embodiment;
Fig. 22 is a partially sectional side view of an image pickup instrument in a sixth embodiment according to the present invention;
Fig. 23 is a fragmentary longitudinal sectional view of the front portion of the image pickup instrument of Fig. 22;
Fig. 24 is a plan view of assistance in explaining the relation between the light guide unit and light sources included in the image pickup instrument of Fig. 22;
Fig. 25 is a diagrammatic view of assistance in explaining a mode of transverse illumination;
Fig. 26 is a diagrammatic view of assistance in explaining a mode of normal illumination;
Fig. 27 is a partially sectional side view of an image pickup instrument in a seventh embodiment according to the present invention;
Fig. 28 is a longitudinal sectional view of the front portion of the image pickup instrument of Fig. 7;
Fig. 29 is a perspective view of a light guide unit and light sources;
Fig. 30 is a bottom view of the light guide unit of Fig. 29; and
Fig. 31 is a perspective view of a light guide unit, a masking member and light sources included in an image pickup instrument in the eighth embodiment according to the present invention.

### PREFERRED EMBODIMENTS OF THE PRESENT INVENTION

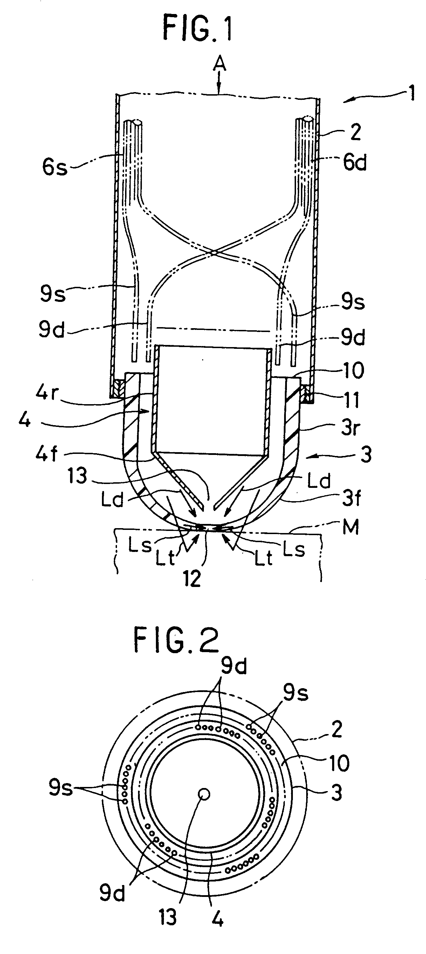

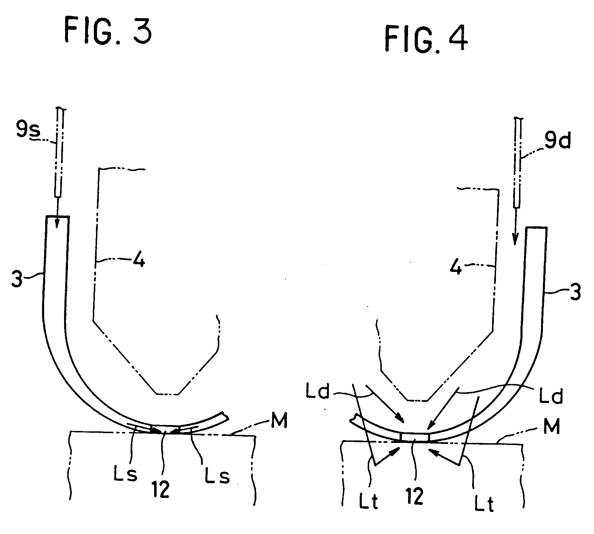

### First Embodiment (Figs. 1 to 5)

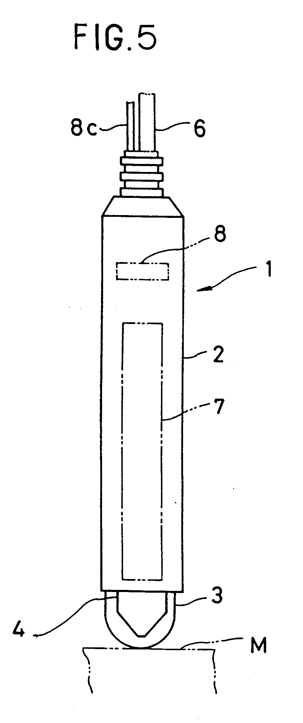

Referring to Fig 5, an image pickup instrument in a first embodiment comprises, as principal components, a main unit 2, a light guide unit 3 and a light screening member 4.

The main unit 2 has a cylindrical sheath containing a light transmitting system 6, an optical system 7 for enlarging an image of an object M, and an image pickup device (CCD) 8. Signals provided by the image pickup device 8 are transmitted through a signal cable 8c and an amplifier, not shown, to a display, not shown. An enlarged image of a magnification in the range of 50x to several thousands times of the object M is displayed on the display.

A light source unit comprises the light transmitting system 6 and light sources, not shown. An illuminating system comprises the light transmitting system 6 and the light guide unit 3, which will be described later.

As shown in Figs. 1 and 2, the light transmitting system 6 consists of a first light transmitting subsystem 6s for transverse illumination, having a plurality of optical fibers 9s, and a second light transmitting subsystem 6d for normal illumination, having a plurality of optical fibers 9d.

The exit ends of the optical fibers 9s of the first light transmitting subsystem 6s are arranged on a circle opposite to the light receiving end surface 10 of the light guide unit 3 at the junction of the main unit 2 and the light guide unit 3. The exit ends of the optical fibers 9d of the second light transmitting subsystem 6d are arranged on a circle inside the circular arrangement of the exit ends of the optical fibers 9c of the first light transmitting subsystem 6s so that light transmitted through the optical fibers 9d is emitted into the inner space of the light guide unit 3. The illuminating light to be transmitted by each light transmitting subsystem can be selectively turned on or off and the intensity of the illuminating light can be regulated. The optical fibers 9 are arranged in a high density as best shown in Fig. 2.

When the front end of the light guide 3 is applied to the surface of the object M, the surface of the object M is at the focal point of the objective lens of the optical system 7. The illuminating light transmitted through the first light transmitting subsystem 6s is converted into transverse illuminating light Ls by the light guide 3. The light guide 3 is formed of a highly transparent synthetic resin, such as an acrylic resin.

An external screw thread 11 is formed in the outer circumference of the rear portion 3r of the light guide 3 to screw the rear portion 3r in the front end of the sheath of the main unit 2 so that the light guide 3 is held on the sheath of the main unit 2 at a correct position relative to the objective lens of the optical system 7. More specifically, the light guide 3 has the rear portion 3r having the shape of a cylinder, and the front portion 3f having the shape of a hemisphere. The rear portion 3r has the light receiving end surface 10, and the front portion 3f is provided at its center with a small light passing hole 12.

If illuminating light is transmitted only through the first light transmitting subsystem 6s for transverse illumination to apply the illuminating light only to the light receiving end surface 10 of the light guide 3, the illuminating light is transmitted through the solid wall of the light guide 3 by total reflection and leaves the light guide as transverse illuminating light Ls through the side surface of the light passing hole 12 in directions nearly parallel to the surface of the object M and falls on the surface of the object M at a large incidence angle. If illuminating light is transmitted only through the second light transmitting subsystem 6d for normal illumination to throw the illuminating light only into the inner space of the light guide 3, part of the illuminating light travels through an annular space between the inner surface of the light guide 3 and the outer surface of the light screening member 4 and through the light passing hole 12, and falls as normal illuminating light Ld on the surface of the object M, while the rest of the illuminating light travels through the annular space and the wall of the light guide 3, penetrates the surface layer of the object M and is reflected as transmitted illuminating light Lt from the interior of the object M. When illuminating light of a desired intensity is transmitted through the first light transmitting subsystem 6s and illuminating light of a desired intensity is transmitted through the second light transmitting subsystem 6d, the object M can be illuminated with both the transverse illuminating light Ls and the normal illuminating light Ld.

The light screening member 4 shields image light reflected by the object M and traveling toward the optical system 7 from other light. The light screening member 4 has a rear portion 4r having a cylindrical shape conforming to the shape of the inner circumference of the light guide 3, and a front portion 4f having the shape of a circular cone and provided at its tip with a light receiving hole 13.

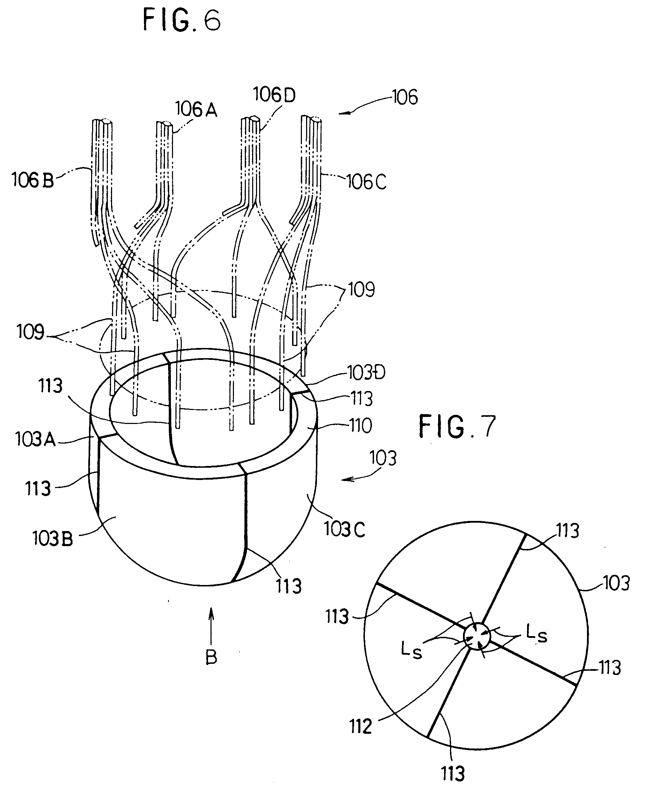

### Second Embodiment (Figs. 6 to 10)

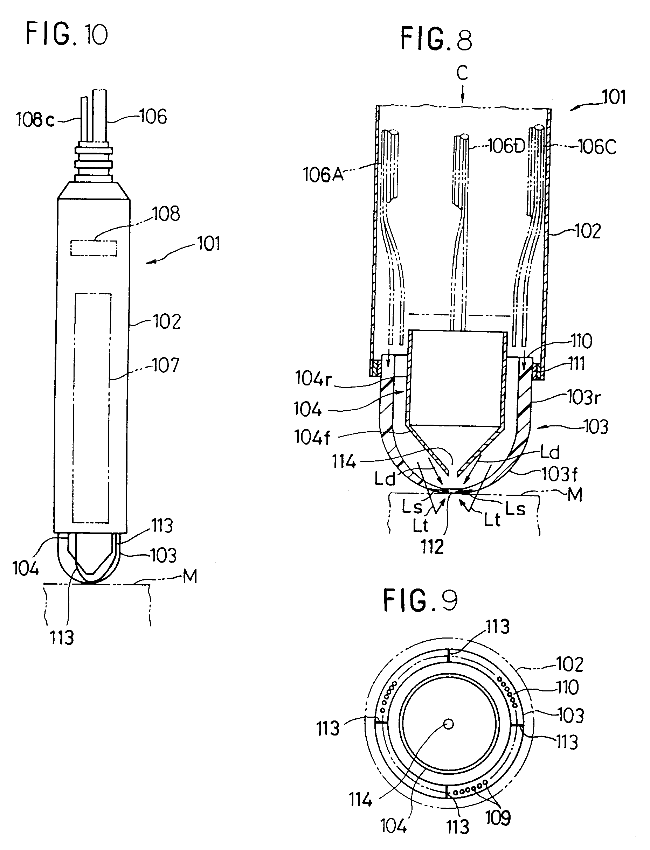

Referring to Fig. 10, an image pickup instrument 101 in a second embodiment according to the present invention, similarly to the image pickup instrument 1 in the first embodiment, comprises a main unit 102, a light guide 103 and a light screening member 104.

The main unit 102 has a cylindrical sheath containing a light transmitting system 106, an optical system 107 for forming an image of an object M, and an image pickup device (CCD) 108. Signals provided by the image pickup device 108 are transmitted through a cable 108c and a signal processor, not shown, to a display, not shown. The image of a magnification in the range of 50x to several thousands times of the object M is displayed on the display.

As shown in Fig. 6, the light transmitting system 106 is divided into four light transmitting subsystems 106A, 106B, 106C and 106D respectively associated with the four segments 103A, 103B, 103C and 103D of a light guide 103. Each light transmitting subsystem comprises a plurality of optical fibers 109. The exit ends of the optical fibers 109 are arranged on a circle at the junction of the main unit 102 and the light guide 103. The illuminating light for each light transmitting subsystem can be selectively turned on or off and the intensity of the illuminating light can be regulated. The exit ends of the optical fibers 109 are arranged in a high density as best shown in Fig. 9.

When the front end of the light guide 103 is applied to the surface of the object M as shown in Fig. 8, the surface of the object M is at the focal point of the objective lens of the optical system 107. The light guide 103 converts the illuminating light transmitted through the light transmitting system 6 into transverse illuminating light Ls, normal illuminating light Ld and transmitted illuminating light Lt. The light guide 103 is formed of a highly transparent synthetic resin, such as an acrylic resin. An external screw thread 111 is formed in the outer circumference of the rear portion 103r of the light guide 103 to screw the rear portion 3r in the front end of the sheath of the main unit 102 so that the light guide 3 is held on the sheath of the main unit 102 at a correct position relative to the objective lens of the optical system 107. More specifically, the light guide 103 has the rear portion 103r having the shape of a cylinder, and the front portion 3f having the shape of a hemisphere. The rear portion 103r has a light receiving end surface 110, and the front portion 103f is provided at its center with a small light passing hole 112. The light guide 103 consists of the four segments 103A to 103D separated by opaque partitions 113 extending between the light receiving end surface 110 and the light passing hole 112. The four segments 103A to 103D are associated respectively with the four light transmitting subsystems 106A to 106D.

The illuminating light applied to the light receiving end surface 110 is transmitted through the solid wall of the light guide 103 by total reflection and leaves the light guide 103 as transverse illuminating light Ls through the side surface of the light passing hole 112 in directions nearly parallel to the surface of the object M and falls on the surface of the object M at a large incidence angle. Part of the illuminating light leaked from the solid wall of the light guide 103 travels through the inner space of the light guide 103 and falls through the light passing hole 112 on the surface of the object M for normal illumination, part of the illuminating light transmitted through the transparent light guide 103 penetrates the surface layer of the object M and is reflected by the internal structure of the object M as transmitted illuminating light Lt.

The direction of travel of the transverse illuminating light Ls can be selectively determined. The illuminating light is applied to the light transmitting subsystem among the light transmitting subsystems 106A to 106D, corresponding to the desired segment among the segments 103A to 103D to throw the transverse illuminating light Ls in a desired direction. The partitions 113 shield the segments from the illuminating light transmitted through the adjacent segments. However, the partitions 113 are not necessarily essential members.

The light screening member 104 shields image light reflected by the object M and traveling toward the optical system 107 of the main unit 102 from other light. The light screening member 104 has a rear portion 104r having a cylindrical shape conforming to the shape of the inner circumference of the light guide 103, and a front portion 104f having the shape of a circular cone and provided at its tip with a light receiving hole 114.

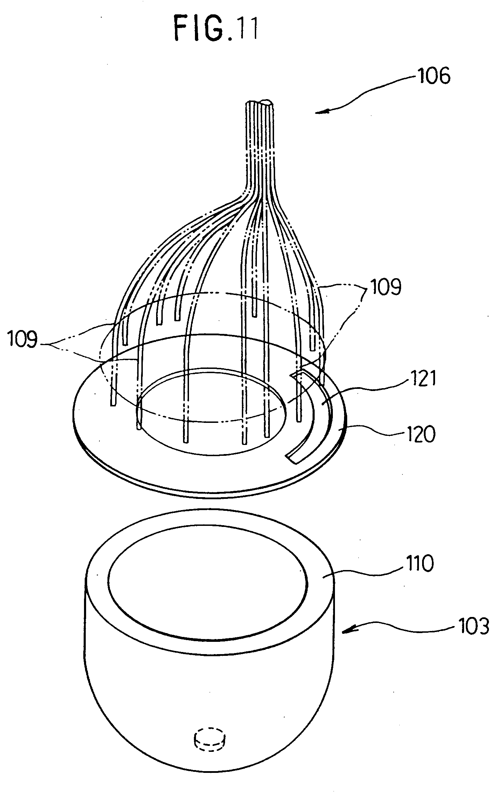

### Third Embodiment (Fig. 11)

An image pickup instrument in a third embodiment according to the present invention is a modification of the image pickup instrument in the second embodiment. The image pickup instrument in the third embodiment, similarly to the image pickup instrument in the second embodiment, is capable of selectively determining the direction of travel of transverse illuminating light Ls. The image pickup instrument is provided with a light transmission system 106, and a mask member 121 disposed between the light transmitting system 106 and the light receiving end surface 110 of a light guide 103. The mask member 120 has an annular shape corresponding to the shape of the light receiving end surface 110 of the light guide 103 and is provided with a slit 120 having the shape of a circular arc in a portion thereof. Only part of the illuminating light transmitted through the light transmitting system 106, corresponding to the slit 121 is able to fall on the light receiving end surface 110. Accordingly, the direction of travel of the transverse illuminating light Ls can be selectively determined by properly determining the angular position of the slit 121 of the mask member 120. The function of the mask member 120 is equivalent to that of a plurality of light transmitting subsystems; that is, the use of the mask member 120 is equivalent to the division of the light transmitting system 106 into a plurality of light transmitting subsystems.

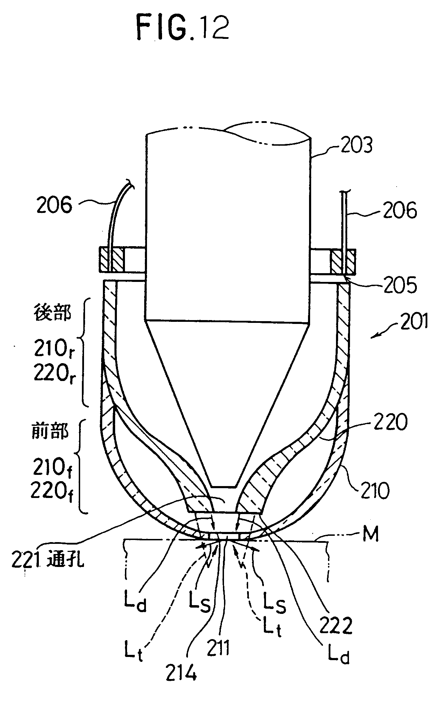

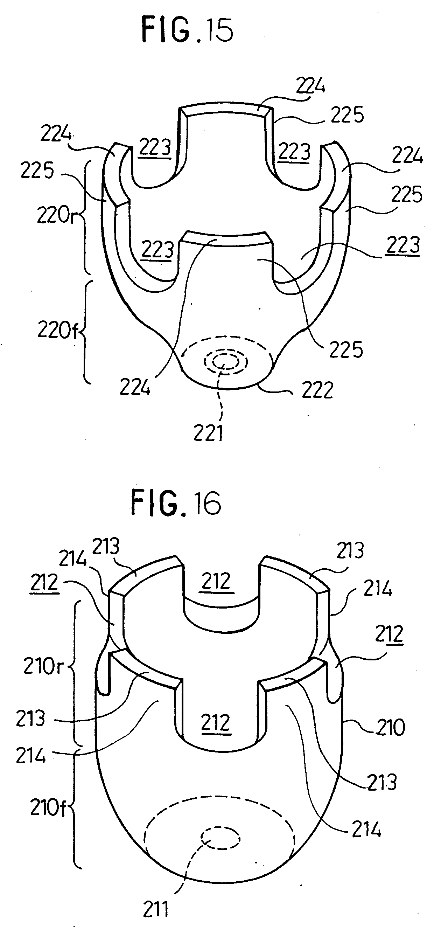

### Fourth Embodiment (Figs. 12 to 17)

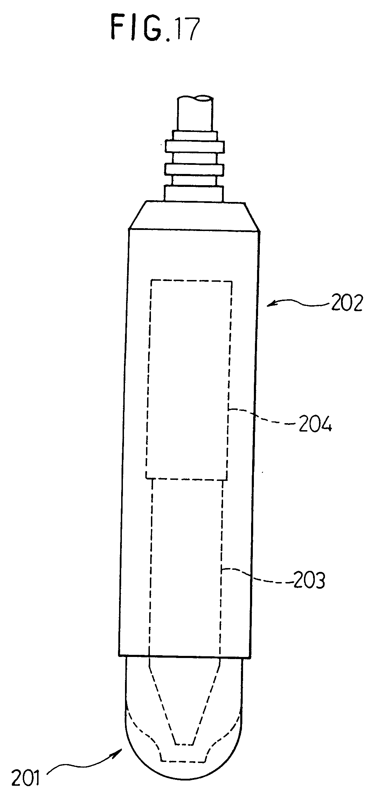

Fig. 17 shows an image pickup instrument 202 in a fourth embodiment according to the present invention. The image pickup instrument 202 is provided with a double-wall light guide 201. The image pickup instrument 202 comprises an optical system 203, an image pickup device 204, such as a CCD, and a light transmitting system 205, which are contained in a generally cylindrical sheath. An image of an object M is formed on the image pickup device 204 by the optical system 203, and the image is displayed on a display included in an observation unit, not shown.

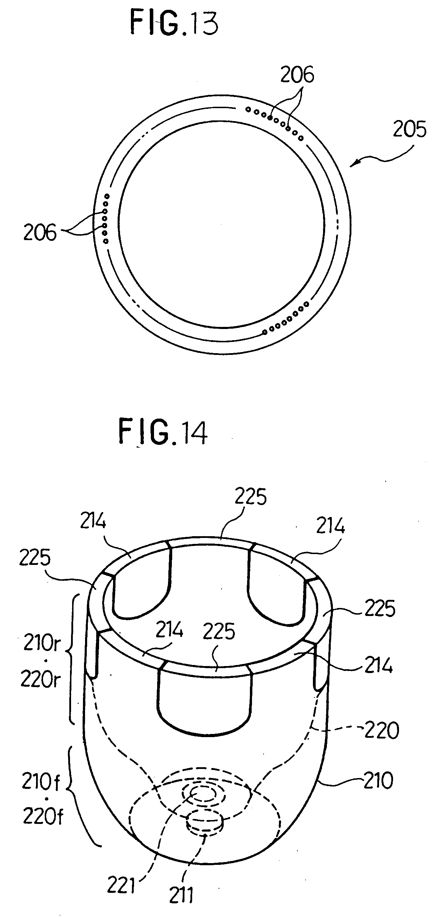

The light transmitting system 205 is similar to those of the foregoing embodiments. As shown in Fig. 12, the light transmitting system 205 has a plurality of optical fibers 206 for transmitting light emitted by a light source. The exit ends of the optical fibers 206 are arranged on a circle as shown in Fig. 13.

Referring to Figs. 12 to 16, the double-wall light guide 201 consists of a first light guide member 210 and a second light guide member 220 disposed inside the first light guide member 210.

The first light guide member 210 is formed of a transparent material, such as an acrylic resin, and has a front portion 210f having a hemispheric shape and a rear portion 210r having a cylindrical shape. The front portion 210f is provided at its center with a light passing hole 211, and the rear portion 210r is provided with four recesses 212 at equal angular intervals.

The first light guide member 210 is used principally for converting the illuminating light into transverse illuminating light. The illuminating light transmitted through the light transmitting system 205 and applied to the light receiving end surface 213 of the rear portion 210r is transmitted through the wall of the first light guide member 210 by total reflection and leaves the first light guide member 210 through the side surface 214 of the light passing hole 211 as transverse illuminating light Ls.

The second light guide member 220 is formed of a transparent material. The second light guide member 220 has a front portion 220f has a front end wall 222 facing an object M and provided with at its center with a central through hole 221. The wall of the front portion 220f extends in a gentle curve from the edge of the front end wall 222. The cylindrical rear portion 220r of the second light guide member 220, similarly to that of the first light guide member 210, is provided with four recesses 223 arranged at equal angular intervals.

The second light guide member 220 is used principally for converting the illuminating light into normal illuminating light Ld. The illuminating light transmitted through the light transmitting system 205 and applied to the light receiving end surface 224 of the rear portion 220r is transmitted through the second light guide member 220 by total reflection and thrown downward through the front end wall 222 as normal illuminating light Ld. Since the front end wall 222 has a relatively large area, part of the normal illuminating light Ld is transmitted through a portion of the first light guide member 210 around the light passing hole 211 to illuminate an area of the object M surrounding an objective area of the same. Part of the normal illuminating light Ld falling on the area surrounding the objective area penetrates the surface layer of the object M and is reflected by the internal structure of the object M as transmitted illuminating light Lt.

The first light guide member 210 and the second light guide member 220 are united with portions 214 of the wall of the rear portion 210r of the first light guide member 210 fitted respectively in the recesses 223 of the second light guide member 220, and portions 225 of the wall of the rear portion 220r of the second light guide member 220 fitted respectively in the recesses 212 of the first light guide member 210 so that the end surfaces 213 of the first light guide member 210 and the end surfaces 224 of the second light guide member 220 form a single circular end surface. Accordingly, the exit ends of the optical fibers 206 of the light transmitting system 205 may be arranged on a single circle, which simplifies the construction of the image pickup instrument. If a further complex construction is not a problem, the light guide members 210 and 220 may be disposed separately, and the light guide members 210 and 220 may be combined individually with two light sources.

As mentioned above, the first light guide member 210 of the double-wall light guide 201 converts the illuminating light into the transverse illuminating light Ls, and the second light guide member 220 of the same converts the illuminating light into the normal illuminating light Ld.

Accordingly, either the transverse illuminating light Ls or the normal illuminating light Ld can be used selectively and the respective intensities of the transverse illuminating light Ls and the normal illuminating light Ld can be changed by dividing the the light transmitting system 205 into light transmitting subsystems respectively for the light guide members 210 and 220, and individually controlling the light transmitting subsystems.

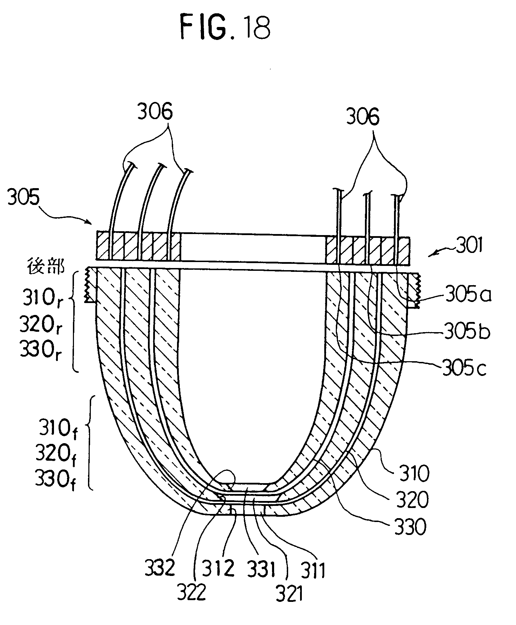

### Fifth Embodiment (Figs. 18 to 21)

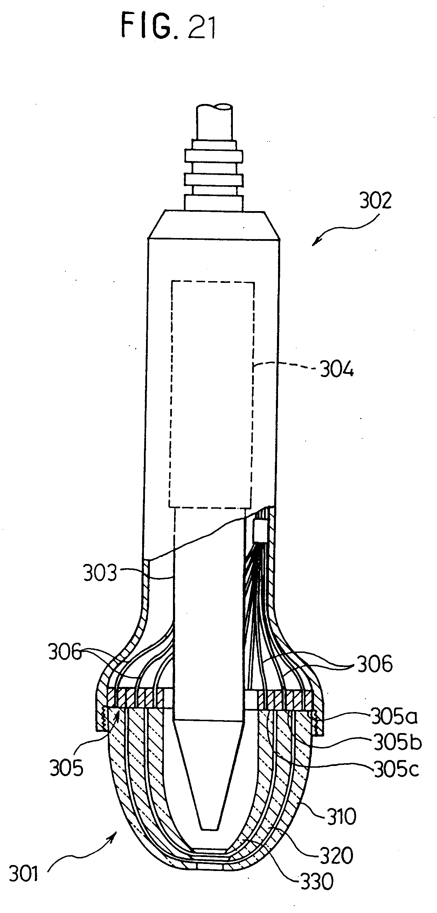

Fig. 21 shows an image pickup instrument 302 in a fifth embodiment according to the present invention provided with a multiwall light guide 301. The image pickup instrument 302 comprises an optical system 303, an image pickup device 304 and a light transmitting system 305, which are contained in a generally cylindrical sheath. An image of an object is formed on the image pickup device 304, such as a CCD by the optical system 303. Image signals provided by the image pickup device 304 is transferred to an observing unit and the image is displayed on a display included in the observing unit.

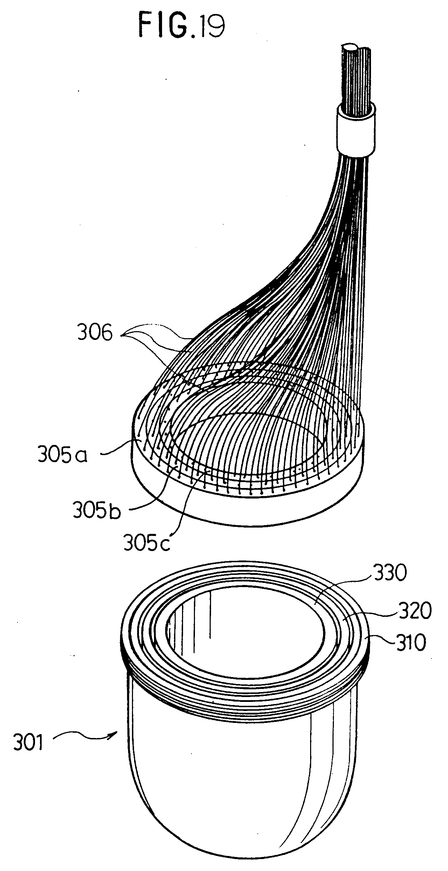

As shown in Fig. 19, the light transmission system 305, similarly to those of the foregoing embodiments, comprises a plurality of optical fibers 306 for transmitting light emitted by light sources, not shown. The optical fibers 306 are divided into three groups, and the exit ends of the optical fibers 306 of the three groups are arranged on three concentric circular rings 305a, 305b and 350c corresponding respectively to a first light guide member 310, a second light guide member 320 and a third light guide member 330 forming the light guide 301. Illuminating light is applied individually and selectively to the optical fibers 306 connected to the circular rings 305a, 305b and 305c and the respective intensities of illuminating light applied to the optical fibers connected to the circular rings 305a, 305b and 305c can be individually controlled.

The multiwall light guide 301 consists of three light guide members, i.e., the first light guide member 310, the second light guide member 320 and the third light guide member 330, which are nested one in another as shown in Fig. 18.

The light guide members 310, 320 and 330 are formed of a transparent material, such as an acrylic resin, have hemispherical front portions 310f, 320f and 330f, and cylindrical rear portions 310r, 320r and 330r, respectively. Through holes 311, 321 and 331 are formed at the centers of the front portions 310f, 320f and 330f, respectively.

The through hole 311 of the first light guide member 310 is substantially vertical, so that the illuminating light transmitted through the wall of the first light guide member by total reflection is thrown horizontally through the side surface 312 of the through hole 311.

The respective through holes 321 and 331 of the second light guide member 320 and the third light guide member 330 are tapered downward, and the side surfaces 322 and 332 of the through holes 321 and 331 are mirror-finished, so that the illuminating light transmitted through the walls of the second light guide member 320 and the third light guide member 330 is reflected downward by the side surfaces 322 and 332.

The through hole 321 of the second light guide member 320 is greater than the through hole 311 of the first light guide member 310, and the through hole 331 of the third light guide member 330 is smaller than the through hole 311 of the first light guide member 310.

The multiwall light guide 301 thus constructed is capable of selectively producing transverse illuminating light Ls, normal illuminating light Ld and transmitted illuminating light Lt, and of simultaneously producing transverse illuminating light Ls, normal illuminating light Ld and transmitted illuminating light Lt of different intensities.

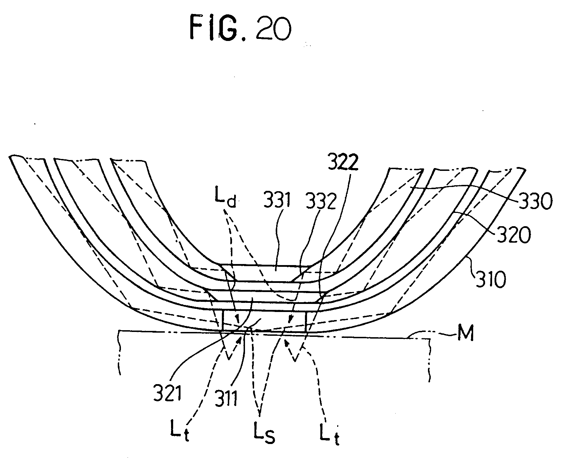

As shown in Fig. 20, the illuminating light transmitted through the wall of the first light guide member 310 is converted into transverse illuminating light Ls horizontally outgoing from the side surface 312 of the through hole 311, the illuminating light transmitted through the wall of the second light guide member 320 is reflected downward by the side surface 322 of the through hole 321, the reflected illuminating light fallen an area surrounding an objective area penetrates the surface layer of the object M and is reflected by the internal structure of the object M as transmitted illuminating light Lt, because the through hole 321 of the second light guide member 320 is greater than the through hole 311 of the first light guide member 310, and the illuminating light transmitted through the wall of the third light guide member 330 is reflected by the the side wall 332 of the through hole 331 and the reflected illuminating light falls as normal illuminating light Id on the objective area of the object M, because the through hole 331 of the third light guide member 330 is smaller than the through hole 311 of the first light guide member 310.

The transverse illuminating light Ls, the transmitted illuminating light Lt and the normal illuminating light Ld to be produced by the light guide members 310, 320 and 330 can be turned on and off selectively, the respective intensities of the transverse illuminating light Ls, the transmitted illuminating light Lt and the normal illuminating light Ld can be optionally regulated and the transverse illuminating light Ls, the transmitted illuminating light Lt and the normal illuminating light Ld of desired intensities can be used in combination by properly selectively applying the illuminating light to the optical fibers connected to the circular rings 305a, 305b and 305c and properly controlling the intensities of the illuminating light applied to the optical fibers connected to the circular rings 305a, 305b and 305c.

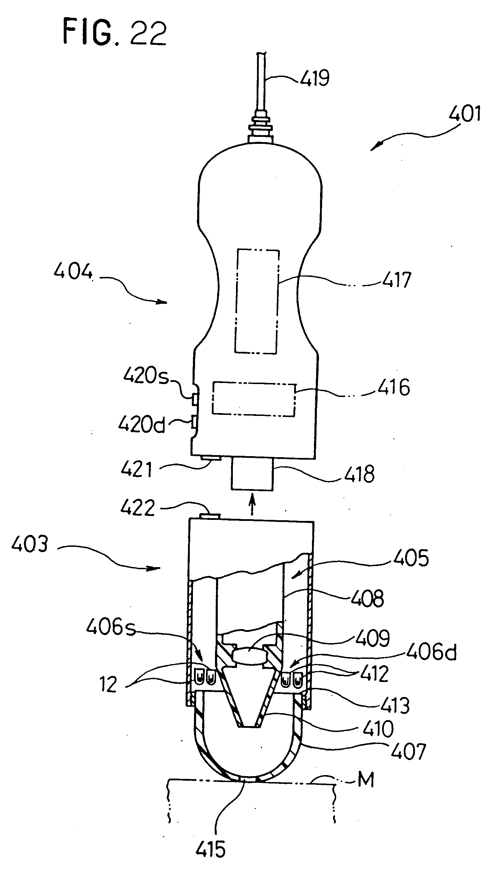

### Sixth Embodiment (Figs. 22 to 26)

An image pickup instrument 401 in a sixth embodiment according to the present invention consists of a front unit 403 and a rear unit 404 detachably joined to the front unit 403 as shown in Fig. 22.

The front unit 403 has a sheath containing an optical system 405, a first lighting system 406s for transverse illumination and a second lighting system 406d for normal illumination, and a light guide 407 connected to the front end of the sheath.

The optical system 405 comprises a cylindrical lens barrel 408 and a lens system including an objective lens 409 and other lenses and held on the lens barrel 408. A tapered light screening member 410 is connected to the front end of the barrel 408. Basically, the surface of an object M is at the focal point of the objective lens 409 when the front end of the light guide 407 is put in contact with the surface of the object M. The position of the light guide 407 on the front unit 403 relative to the objective lens 409 is adjustable to enable non-contact observation of the object M.

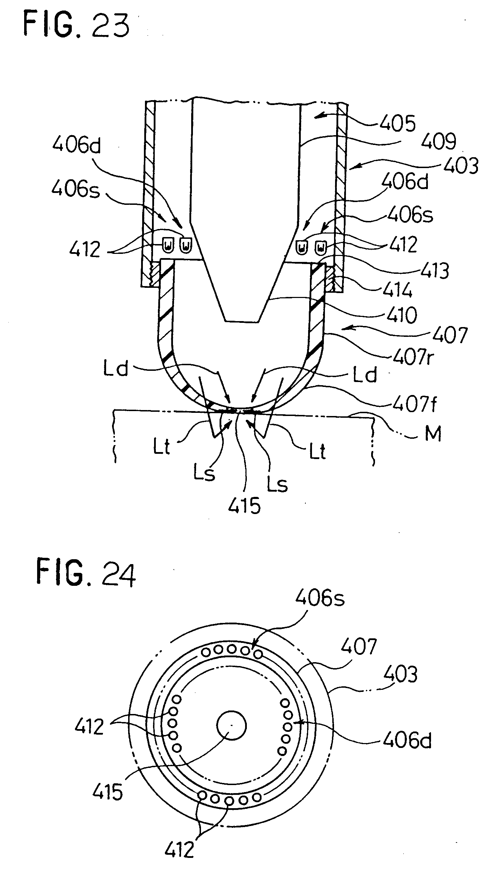

As shown in Fig. 24, each of the first lighting system 406s for transverse illumination and the second lighting system 406d for normal illumination comprises a plurality of light sources 412 closely arranged on a circle. The light sources 412 of the first lighting system 406s for transverse illumination are arranged opposite to the light receiving end surface 413 of a light guide 407, and the light sources 412 of the second lighting system 406d for normal illumination are arranged inside the circular arrangement of the light sources 412 of the first lighting system 406s so as to throw light into the inner space of the light guide 407.

The light guide 407 is put on the surface of the object M to focus the objective lens 409 of the optical system 405 on the surface of the object M and converts the illuminating light emitted by the lighting systems 406s and 406d into normal illuminating light Ld, transverse illuminating light Ls and transmitted illuminating light Lt. The light guide 407 is formed of a highly transparent synthetic resin, such as an acrylic resin.

A screw thread 414 is formed in the outer circumference of the rear portion 407r of the light guide 407 and the threaded portion of the light guide 407 is screwed in the front end of the sheath of the front unit 403. The position of the light guide 407 relative to the objective lens 409 is adjustable by turning the light guide 407 relative to the sheath of the front unit 403. More specifically, the light guide 407 has the cylindrical rear portion 407r and a hemispherical front portion 407f, the rear portion 407r has a light receiving end surface 413, and the front portion 407f is provided at its center with a small light passing hole 415.

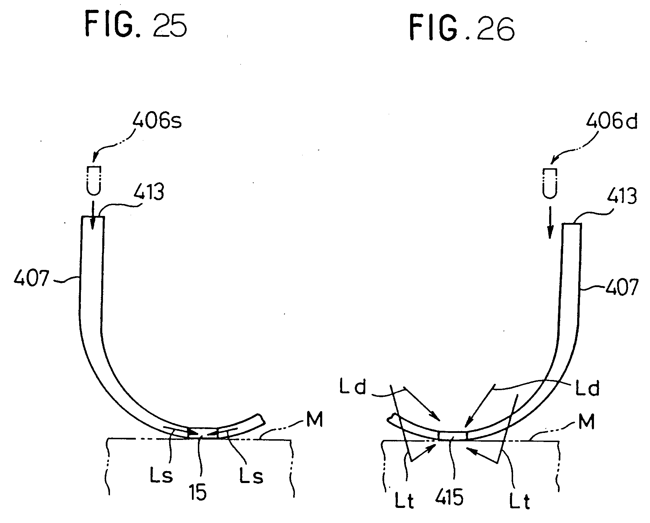

When only the light sources 412 of the first lighting system 406s for transverse illumination are turned on to apply illuminating light only to the light receiving end surface 413 of the light guide 407, the illuminating light is transmitted through the solid wall of the light guide 407 by total reflection and emitted through the side surface of the light passing hole 415 as transverse illuminating light Ls in directions nearly parallel to the surface of the object M and falls on the surface of the object M at a large incidence angle as shown in Fig. 25. When only the light sources 412 of the second lighting system 406d for normal illumination are turned on to emit the illuminating light into the inner space of the light guide 407, part of the illuminating light travels through the light passing hole 415 and falls on the surface of the object M as normal illuminating light Ld, and part of the illuminating light is transmitted through the light guide 407, penetrates the surface layer of the object M and is reflected by the internal structure of the object M as transmitted illuminating light Lt as shown in Fig. 26. The transverse illuminating light Ls and the normal illuminating light Ld of desired intensities can be used in combination by regulating the respective luminous intensities of the first lighting system 406s for transverse illumination and the second lighting system 406d for normal illumination.

Since the front unit 403 and the rear unit 404 can be detachably joined together, a desired front unit among a plurality of front units of different types and a desired rear unit among a plurality of rear units of different types can be used in combination according to purposes and the type of the object.

The rear unit 404 has a case containing an image pickup device (CCD) 416 for converting image light into corresponding image signals, and a signal processor 417 for processing the image signals provided by the image pickup device 416. A connecting pipe 418 for connecting the rear unit 404 to the front unit 403 is projected from the front end of the case, a cable 419 for connecting the image pickup device 416 to a display, not shown, extends from the rear end of the case, switches 420s and 420d for turning on and off the lighting systems 406s and 406d are attached to the side wall of the case, terminals 421 connected to the switches 420s and 420d are held on the front wall of the case so as to be brought into contact with terminals 422 connected to the lighting systems 406s and 406d and held on the rear end wall of the case of the front unit 403.

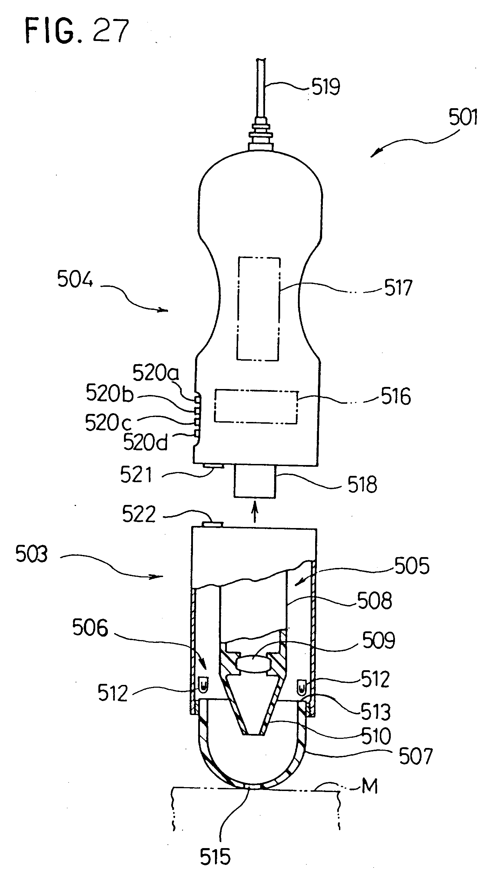

### Seventh Embodiment (Figs. 27 to 30)

An image pickup instrument 501 in a seventh embodiment according to the present invention incorporates the features of the image pickup instruments in the second and sixth embodiments in combination. As shown in Fig. 27, the image pickup instrument 501 has a front unit 503 and a rear unit 504, which can be detachably joined together.

The front unit 503 has a sheath containing an optical system 505, a lighting system 506, and a light guide 507 connected to the front end of the sheath.

The optical system 505 comprises a cylindrical lens barrel 508, and a lens system comprising an objective lens 502 and other lenses and held on the lens barrel 508. A tapered light screening member 510 is attached to the front end of the lens barrel 508. Basically, the surface of an object M is at the focal point of the objective lens 509 when the front end of the light guide 507 is put in contact with the surface of the object M. The position of the light guide 507 relative to the objective lens 509 is adjustable to enable non-contact observation of the object M.

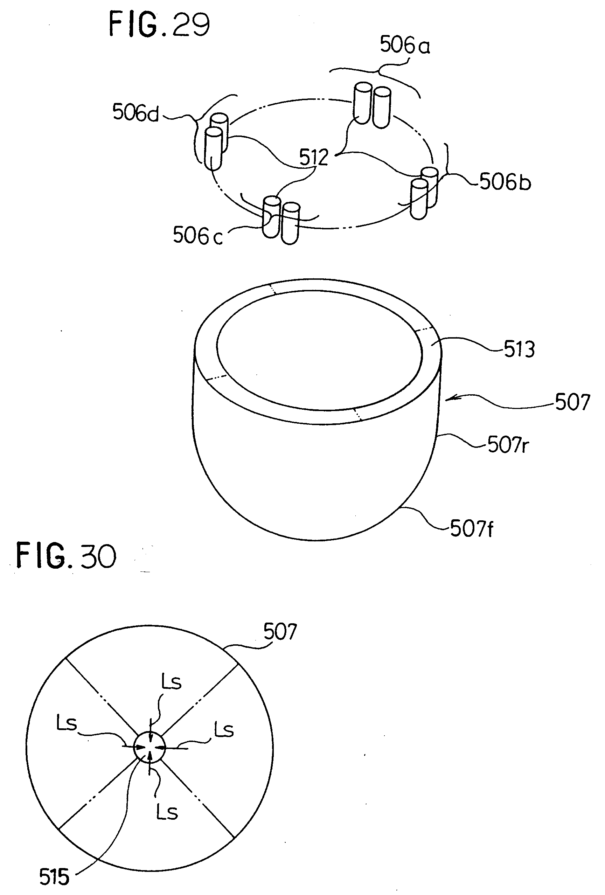

As shown in Fig. 29, the lighting system 506 has a plurality of light sources 512 arranged outside the light screening member 510 on a circle opposite to the light receiving end surface 513 of the light guide 507. The light sources 512 are divided into four groups 506a, 506b, 506c and 506d. The light sources 512 of each group are turned on and off simultaneously.

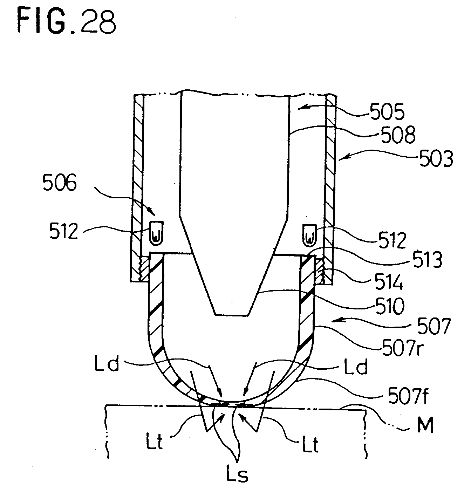

The light guide 507 is put on the surface of the object M to focus the objective lens 509 of the optical system 505 on the surface of the object M and converts the illuminating light emitted by the lighting system 506 into normal illuminating light Ld, transverse illuminating light and transmitted illuminating light Lt as shown in Fig. 28. The light guide is formed of a highly transparent synthetic resin, such as an acrylic resin. A screw thread 514 is formed in the outer circumference of the rear portion 507r of the light guide 507 and the threaded portion of the light guide 507 is screwed in the sheath of the front unit 503. The position of the light guide 507 relative to the objective lens 509 is adjustable. More specifically, the light guide 507 has the cylindrical rear portion 507r having the light receiving end surface 513, and a hemispherical front portion 507f provided at its center with a small light passing hole 515.

The illuminating light applied to the light receiving end surface 513 is transmitted through the solid wall of the light guide 507 by total reflection and is emitted through the side surface of the light passing hole 515 as transverse illuminating light Ls in directions substantially parallel to the surface of the object M. Part of the illuminating light leaked from the solid wall of the light guide into the inner space of the light guide travels through the light passing hole 515 and falls on the surface of the object M as normal illuminating light Ld. Part of the illuminating light leaked from the solid wall of the light guide 507 into the inner space of the light guide 507 and transmitted through the wall of the light guide 507 penetrates the surface layer of the object M and is reflected by the internal structure of the object M as transmitted illuminating light Lt.

The direction of the transverse illuminating light Ls can be selectively determined. Only the light sources 512 of a desired one of the groups 506a to 506d are turned on to transmit the illuminating light through only a corresponding segment among four segments of the light guide 507 partitioned by short dashes lines in Figs. 29 and 30 and to emit the transverse illuminating light Ls through a portion of the side surface of the light passing hole 515 corresponding to the selected segment. Preferably, the segments of the light guide are separated from each other by opaque partitions to limit the direction of travel of the transverse illuminating light Ls more precisely.

Since the front unit 503 and the rear unit 504 can be detachably joined together, it is possible to use a desired front unit among a plurality of front units of different types and a desired rear unit among a plurality of rear unit of different types in combination according to purposes and the type of the object.

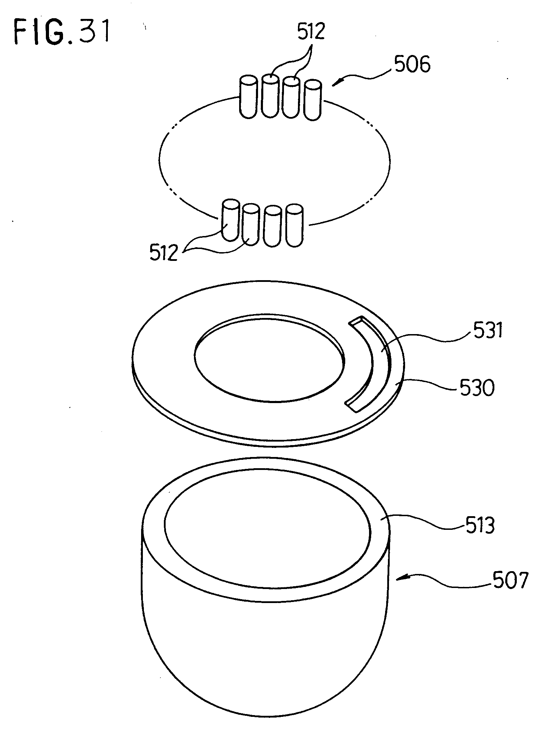

The rear unit 504 has a case containing an image pickup device 516 (CCD) for converting image light provided by the optical system 505 into corresponding image signals, and a signal processor 517 for processing the image signals provided by the image pickup device 516. A connecting pipe 518 is projected from the front end of the case of the rear unit 504 to connect the rear unit 504 to the front unit 503, a cable 519 for connecting the image pickup device 516 to a display, not shown, extends from the rear end of the case, switches 520a, 520b, 520c and 520d for turning on and off the groups 506a to 506d of the light sources 512 are attached to the side wall of the case, and terminals 521 connected to the switches 520a to 520d are attached to the front surface of the case so as to be brought into contact with terminals 522 connected to the lighting system 506. Eighth Embodiment (Fig. 31)

Fig. 31 shows an image pickup instrument in an eighth embodiment according to the present invention, which is a modification of the image pickup instrument in the seventh embodiment incorporating the feature of the image pickup instrument in the third embodiment. The image pickup instrument in the eighth embodiment, similarly to the image pickup instrument in the seventh embodiment, is capable of selectively determining the direction of travel of the transverse illuminating light Ls. Concretely, the image pickup instrument is provided with a lighting system having a single group of light sources, and an annular mask member 530 disposed between the lighting system and the light receiving end surface 513 of a light guide 507. The mask member 530 has an annular shape corresponding to the light receiving end surface 513 of the light guide 507 and is provided with a slit 531 having the shape of a circular arc to allow only part of the illuminating light emitted by the lighting system 506 corresponding to the slit 531 to fall on the light receiving end surface 513 of the light guide 507. The angular position of the mask member 530 is determined selectively, which is equivalent to selectively using a desired group among a plurality of groups of light sources.

### CAPABILITY OF EXPLOITATION IN INDUSTRY

The image pickup instrument according to the present invention is capable of illuminating an object selectively by normal illuminating light, transverse illuminating light or transmitted illuminating light and of using the normal illuminating light, the transverse illuminating light and the transmitted illuminating light of different intensities in combination. Thus, the image pickup instrument of the present invention further expands the field of application of the observation of enlarged images.

## Claims

1. An image pickup instrument comprising: an illuminating means comprising a plurality of light source means, and a light guide having a hemispherical front portion provided at its center with a light passing hole, and capable of transmitting illuminating light applied to a light receiving end surface formed in the rear portion thereof through the solid wall thereof by total reflection so that the illuminating light is emitted through the side surface of the light passing hole; an image pickup means; and an optical means for forming an image of an objective portion of an object illuminated by the illuminating means on the image pickup means;
wherein the light source means comprises a plurality of light source subsystems, and the plurality of light source subsystems are used selectively.

2. An image pickup instrument according to claim 1, wherein said light source means comprises a transverse illuminating light source system and a normal illuminating light source system, the illuminating light emitted by the transverse illuminating light source system is applied to the light receiving end surface of the light guide so as to be transmitted through the solid wall of the light guide, and the illuminating light emitted by the normal illuminating light source system travels through the inner space of the light guide.

3. An image pickup instrument according to claim 1, wherein the plurality of light source subsystems are used selectively to emit the illuminating light directionally through the side surface of the light passing hole by applying the illuminating light only to a portion of the light receiving end surface.

4. An image pickup instrument according to claim 3, wherein said light guide consists of a plurality of segments separated from each other by opaque partitions extending from the light receiving end surface to the light passing hole, and said light source means applies the illuminating light to the individual segments.

5. An image pickup instrument according to claim 3, wherein a mask member provided with a slit is disposed between the light source means and the light guide, and the mask member is turned so that the slit is located at a position corresponding to a portion of the light receiving end surface to apply the illuminating light only to the portion of the light receiving surface corresponding to the slit.

6. An image pickup instrument according to claim 1, wherein said light guide consists of a first light guide member having a hemispherical front portion provided at its center with a light passing hole, and a second light guide member having a front portion having a bottom wall provided at its center with a light passing hole and a gently curved side wall extending from the edge of the bottom wall, and disposed inside the first light guide member.

7. An image pickup instrument according to claim 6, wherein each of said first and second light guide members has a rear portion having alternate recesses and walls, and the first and second light guide members are united with the walls of first light guide member fitted in the recesses of the second light guide member, respectively, and the walls of the second light guide member fitted in the recesses of the first light guide member, respectively.

8. An image pickup instrument according to claim 1, wherein said light guide consists of a plurality of light guide members nested one in another, and each light guide member has a hemispherical front portion provided at its center with a light passing hole.

9. An image pickup instrument according to claim 8, wherein said plurality of light guide members are three light guide members, the outermost light guide member transmits the illuminating light through the solid wall thereof by total reflection and emits the illuminating light horizontally through the side surface of the light passing hole thereof, each of the inner light guide members transmits the illuminating light through the solid wall thereof by total reflection and reflects the illuminating light downward by the side surface of the light passing hole thereof, the light passing hole of one of the inner light guide members is smaller than the light passing hole of the outermost light guide member, and the light passing hole of the other inner light guide member is larger than the light passing hole of the outermost light guide member.

10. An image pickup instrument according to any one of claims 2 to 9, wherein the image pickup instrument consists of a first unit and a second unit detachably joined to the first unit, the first unit has a sheath containing the light sources of said light source means, and said optical system, and the second unit has a case containing said image pickup means and a signal processing means for processing the output signal of the image pickup means and gives signals to a display means.
